# EUROPEAN PATENT APPLICATION

(11) **EP 4 624 949 A1**
(43) Date of publication of application: **01.10.2025**
(21) Application number: 23895095.0
(22) Date of filing: 24.11.2023
(51) Int. Cl.: G01R 31/317, G01R 31/3181, G01R 31/28, G01R 29/12

(54) **TOUCH DRIVING DEVICE AND DISPLAY DEVICE**

(30) Priority: 25.11.2022 KR 20220160895
(71) Applicant: LX Semicon Co., Ltd., Daejeon 34027 (KR)
(72) Inventor: JANG, Moon Ho, Daejeon 34027 (KR)
(74) Representative: Ter Meer Steinmeister & Partner
(86) International application number: PCT/KR2023/019169
(87) International publication number: WO 2024/112168

(57) **Abstract**

The touch driving device can include a controller that detects an abnormal signal on a panel during a detection period. The touch driving device can be driven in time division using an in-cell touch method. When allocating dummy periods and data period to be located alternately, the detection period can be allocated within the dummy period.

Not only can touch malfunctions be prevented through detection of the abnormal signal, but the occurrence of ghost touches or touch insensitivity phenomenon can be fundamentally blocked, thereby improving product reliability.

## Description

### BACKGROUND OF THE DISCLOSURE

### Field

The embodiment relates to a touch driving device and a display device.

### Discussion of the Related Art

As informatization progresses, various display devices that can visualize information are being developed.

The display device can comprise a panel with a touch function and a touch driving device. The display device is employed in various electronic devices. The display device executes a desired function or program in response to a touch on the panel.

The touch driving device can comprise a touch input circuit and a controller. A touch sensing signal for each area of the panel received through the touch input circuit is provided to the controller, and the controller performs touch recognition or an operation corresponding to the touch based on a plurality of touch sensing signals for a plurality of areas of the panel. That is, the controller generates an interrupt signal when the number of touch sensing signals determined for each data period is received, and performs touch recognition or an operation corresponding to the touch based on the plurality of received touch sensing signals. The data period is a period allocated for receiving a plurality of touch sensing signals for a plurality of areas of the panel.

Meanwhile, the panel is vulnerable to noise such as static electricity. If static electricity flows into the panel, the touch sensing signal is considered not a touch sensing signal by the corresponding static electricity and is missed. In this instance, the corresponding touch sensing signal is not provided to the controller. For example, when the panel has 100 areas, touch recognition or an operation corresponding to the touch is performed using 100 touch sensing signals received for each data period. If static electricity occurs at any point in the first data period, the specific touch sensing signal corresponding to that point is missing, so that only 99 touch sensing signals are received during the first data period. The controller does not generate an interrupt signal because 100 touch sensing signals have not been received. The controller generates an interrupt signal only when the first touch sensing signal is received in the next data period, that is, the second data period. That is, the touch sensing signal during the first data period and the touch sensing signal during the second data period are mixed.

In this instance, touch recognition or an operation corresponding to the touch is performed based on 99 touch sensing signals received during the first data period and 1 touch sensing signal received during the second data period, so that there is an issue with ghost touches occurring. The ghost touch means that an area other than the user's touch area is recognized as being touched, resulting in a malfunction corresponding to the touch at another point. In contrast, there is a problem of a touch insensitivity phenomenon in which touch operations are not performed because the touch area is recognized as greater than the user's touch area.

### SUMMARY OF THE DISCLOSURE

The embodiment aims to solve the above-mentioned problems and other problems.

Another object of the embodiment is to provide a touch driving device and a display device that can detect noise such as static electricity.

Another object of the embodiment is to provide a touch driving device and a display device that can prevent touch malfunction.

Another object of the embodiment is to provide a touch driving device and a display device that can prevent the occurrence of ghost touches or touch insensitivity phenomenon.

The technical problems of the embodiments are not limited to those described in this item and can comprise those that can be understood through the description of the invention.

According to one aspect of the embodiment to achieve the above or other objects, a touch driving device for time-dividing operation of a panel with an in-cell touch type structure, comprising: a controller configured to detect an abnormal signal on the panel during a detection period, wherein when allocating dummy periods and data period to be located alternately, the detection period is allocated within the dummy period.

The dummy period and the data period can be allocated based on a touch synchronization signal.

When the detection period is located before the data period, the detection period can be adjacent to a first touch period of a plurality of touch periods.

When the detection period is located after the data period, the detection period can be spaced far from the last touch period of the plurality of touch periods.

When detecting the abnormal signal on the panel, the controller can ignore a touch sensing signal obtained during the data period or reset the touch driving device.

According to another aspect of the embodiment to achieve the above or other objects, a touch driving device, comprising: a plurality of multiplexers configured to receive a plurality of touch sensing signals or an abnormal signal from a panel; and a controller configured to detect the abnormal signal through the plurality of multiplexers during a detection period, wherein when allocating dummy periods and data period to be located alternately, the detection period is allocated within the dummy period.

The touch driving device can comprise a plurality of switches between the plurality of multiplexers and the controller.

When receiving the plurality of touch sensing signals, the controller can sequentially turn on the plurality of switches.

When detecting the abnormal signal, the controller can simultaneously turn on the plurality of switches.

According to another aspect of the embodiment to achieve the above or other objects, a display device, comprising: a panel; and a touch driving device configured to detect an abnormal signal on the panel during a detection period, wherein when allocating dummy periods and data period to be located alternately, the detection period is allocated within the dummy period.

According to at least one of the embodiments, a part of the dummy section in which no touch operation is performed can be allocated as a detection section, and an abnormal signal such as static electricity can be detected during the corresponding detection section. When an abnormal signal is detected, touch malfunction can be prevented by ignoring or discarding the touch sensing signal obtained in the data period after the corresponding detection section. When an abnormal signal is detected, the reliability of the product can be improved by fundamentally blocking the occurrence of ghost touches or touch insensitivity phenomenon by ignoring or discarding the touch sensing signal obtained in the data period behind the corresponding detection section.

### BRIEF DESCRIPTION OF THE DRAWINGS

FIG. 1 is a block diagram showing a display device according to an embodiment.
FIG. 2 is a circuit diagram showing a touch sensing circuit according to a first embodiment.
FIG. 3a shows the first switch turned on to detect a touch sensing signal.
FIG. 3b shows a plurality of switches turned on to detect an abnormal signal.
FIG. 4 is a timing diagram for an operation of a display device according to an embodiment.
FIG. 5 is a waveform diagram showing detection of an abnormal signal during a touch sensing operation.
FIG. 6 is a circuit diagram showing a touch sensing circuit according to a second embodiment.
FIG. 7 shows a detection period.
FIG. 8 shows how abnormal signals are controlled.

The sizes, shapes, dimensions, etc. of the components shown in the drawings can differ from actual ones. In addition, even if the same the components are shown in different sizes, shapes, dimensions, etc. between the drawings, this is only an example on the drawing, and the same the components have the same sizes, shapes, dimensions, etc. between the drawings.

### DETAILED DESCRIPTION OF EMBODIMENTS

Hereinafter, the embodiment disclosed in this specification will be described in detail with reference to the accompanying drawings, but the same or similar components are given the same reference numerals regardless of reference numerals, and redundant descriptions thereof will be omitted. The suffixes 'module' and 'unit' for the components used in the following descriptions are given or used interchangeably in consideration of ease of writing the specification, and do not themselves have a meaning or role that is distinct from each other. In addition, the accompanying drawings are for easy understanding of the embodiment disclosed in this specification, and the technical idea disclosed in this specification is not limited by the accompanying drawings. Also, when an component such as a layer, region or substrate is referred to as being 'on' another component, this means that there can be directly on the other component or be other intermediate components therebetween.

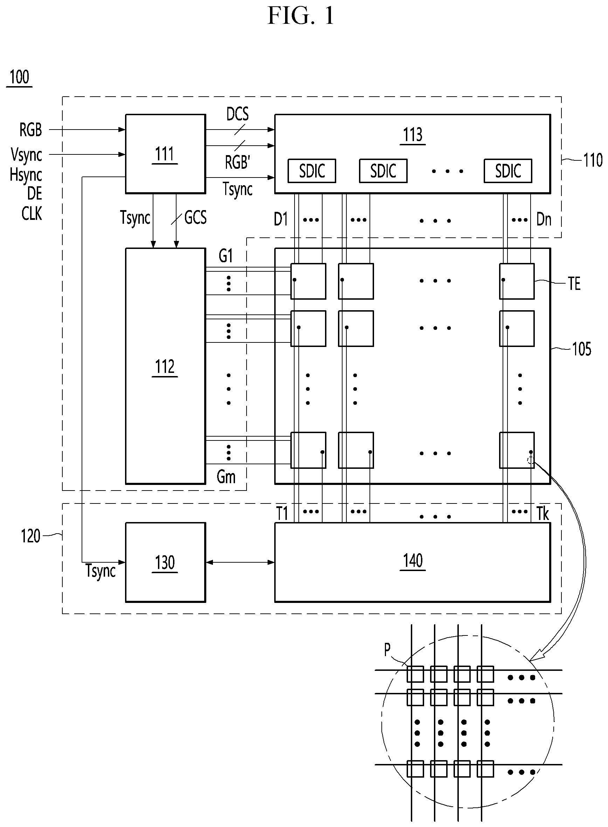

FIG. 1 is a block diagram showing a display device according to an embodiment.

Referring to FIG. 1, the display device 100 according to an embodiment can comprise a panel 105, a display driving device 110, a touch driving device 120, etc.

The display device 100 according to the embodiment can perform a display function and a touch sensing function. The display device 100 according to an embodiment can be implemented as a flat panel display, such as a liquid crystal display or an organic light emitting diode display.

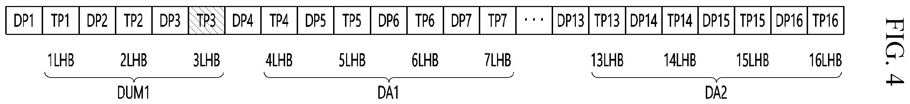

As shown in FIG. 4, the panel 105 can be operated with periodically repeating display periods DP1 to DP16 and touch periods TP1 to TP16. That is, one cycle can be composed of one display period and one touch period. For example, in the liquid crystal display device 100, an image can be displayed on the panel 105 using light emitted from a backlight device during display period DP1 to DP16. A touch on the panel 105 can be sensed during the touch period TP1 to TP16.

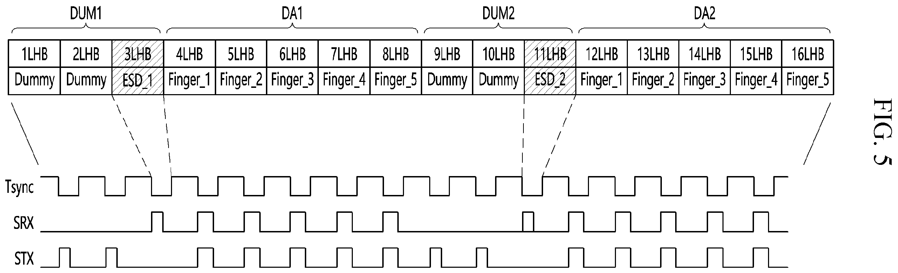

A plurality of display periods DP1 to DP16 and a plurality of touch periods TP1 to TP16 can be time-divided using the touch synchronization signal Tsync. As shown in FIG. 5, the display periods DP1 to DP16 are allocated in synchronization with a high level of the touch synchronization signal Tsync, and the touch periods TP1 to TP16 are allocated in synchronization with a low level of the touch synchronization signal Tsync. The low level of the touch synchronization signal Tsync can be referred to as long horizontal blank (LHB). Therefore, in the following description, the touch period and the LBH can be used interchangeably.

As shown in FIGS. 4 and 5, a plurality of dummy period DUM1 and DUM2 and a plurality of data period DA1 and DA2 can be allocated using a plurality of touch periods TP1 to TP16. That is, a plurality of dummy period DUM1 and DUM2 and a plurality of data period DA1 and DA2 can be allocated to be located alternately.

The touch periods TP1 to TP3 and TP9 to TP11 included in the dummy period DUM1 and DUM2 can be periods in which no touch operation is performed. The touch periods TP4 to TP8 and TP12 to TP16 included in the data period DA1 and DA2 can be periods in which a touch operation is performed. The first dummy period DUM1 and the second dummy period DUM2 each comprise three LHBs 1LHB to 3LHB and 9LHB to 11LHB, and the first data period DA1 and the second data period DA2 each comprise 5 LHBs. This is just one example, where the first dummy period DUM1 and the second dummy period DUM2 can each comprise more than three LHBs, the first data period DA1 and the second data period DA2 can each comprise more than five LHBs.

For example, the first data period DA1 and the second data period DA2 can each sense a touch sensing signal corresponding to one frame on the panel 105. Accordingly, based on the touch sensing operation, the first data period DA1 can correspond to the touch sensing period of the first frame, and the second data period DA2 can correspond to the touch sensing period of the second frame. In contrast, the image display operation can or may not be the same as the touch sensing operation. For example, based on the image display operation, the fourth display period DP4 to the eighth display period DP8 can correspond to an image display period of one frame. In this instance, an image display operation may not be performed in each of the first display period DP1 to the third display period DP3. Alternatively, based on the image display operation, the first display period DP1 to the eighth display period DP8 can correspond to an image display period of one frame.

Meanwhile, in the embodiment, as shown in FIGS. 4 and 5, the detection period ESD1 and ESD2 can be allocated within the dummy period DUM1 and DUM2. The dummy period DUM1 and DUM2 can be a period in which a touch sensing operation is not performed. Some of the dummy period DUM1 and DUM2 can be allocated to detection period ESD1 and ESD2. For example, the third touch period TP3 of the first dummy period DUM1 can be allocated to the detection period ESD1. For example, the eleventh touch period TP11 of the second dummy period DUM2 can be allocated as the detection period ESD2. Noise such as static electricity can be detected during the detection period ESD1 and ESD2.

The first dummy period DUM1, the first data period (DAT1), the second dummy period DUM2, and the second data period DA2 can be located alternately. The first data period DA1 and the second data period DA2 can each comprise a plurality of touch periods TP4 to TP8 and TP 12 to TP16. A touch sensing operation can be performed in each of the plurality of touch periods TP4 to TP8 and TP 12 to TP16 of the first data period DA1 and the second data period DA2.

Meanwhile, as shown in FIGS. 4 and 5, some TP3 (3LHB) and TP11 (11LHB) of each of the first dummy period DUM1 and the second dummy period DUM2 can be allocated as the detection period ESD1 and ESD2. Detection of abnormal signals such as static electricity can be performed only during the detection period ESD1 and ESD2.

A detection period ESD1 and ESD2 can be allocated to every dummy period DUM1 and DUM2, or a detection period can be allocated to a dummy period after two to five data periods.

When the detection period ESD1 and ESD2 is located before the data period DA1 and DA2, the detection period ESD1 and ESD2can be adjacent to the first touch period TP4 and TP12 among a plurality of touch periods TP4 to TP8 and TP12 to TP12 of the data period DA1 and DA2, but is not limited thereto. When the detection period ESD1 and ESD2 are located after the data period DA1 and DA2, the detection period ESD1 and ESD2 can be spaced far from the last touch period TP8 and TP16 among the plurality of touch periods TP4 to TP8 and TP12 to TP12 of the data period DA1 and DA2, but is not limited thereto. The detection period ESD2 can be located between the first data period DA1 and the second data period DA2. The detection period ESD2 can be located closer to the first touch period TP12 of the second data period DA2 than the last touch period TP8 of the first data period DA1, but is not limited thereto.

Although not shown, the detection period ESD1 and ESD2 can be allocated to a period corresponding to two or more LHBs. Although not shown, the detection period ESD1 and ESD2 can be allocated to be the same as the dummy period DUM1 and DUM2. In this instance, since the detection period ESD1 and ESD2 are dummy period DUM1 and DUM2, the detection period ESD1 and ESD2 and the data period DA1 and DA2 can be allocated to be located alternately. Although not shown, the detection period ESD1 and ESD2 can be allocated to a period corresponding to the remaining LHBs except for a first LHB adjacent to the last touch period TP8 of the first data period DA1 and the last LHB adjacent to the first touch period TP12 of the second data period DA2 among the plurality of LHBs in the dummy period DUM1 and DUM2. That is, the detection period ESD1 and ESD2 can be allocated to a period corresponding to the second LHB to the last LHB among the plurality of LHBs of the dummy period DUM1 and DUM2.

Meanwhile, the panel 105 can display an image of a certain gray scale or receive a touch input. The panel 105 can have an in-cell touch type structure using a capacitive method. For example, the panel 105 can have an in-cell touch type structure using a self-capacitance type or an in-cell touch type structure using a mutual-capacitance type.

The panel 105 can comprise a plurality of gate lines G1 to Gm, a plurality of data lines D1 to Dn, a plurality of pixels P, a plurality of touch sensors TE, a plurality of touch lines T1 to Tk, etc.

Each of the plurality of gate lines G1 to Gm can receive a scan pulse during the display period DP1 to DP16. Each of the plurality of data lines D1 to Dn can receive a data signal during the display period DP1 to DP16. A plurality of gate lines G1 to Gm and a plurality of data lines D1 to Dn can be disposed to intersect each other on the substrate. A plurality of gate lines G1 to Gm and a plurality of data lines D1 to Dn can each be connected to a plurality of pixels P on the substrate. The plurality of pixels P can comprise a thin film transistor connected to the gate line G1 to Gm and the data line D1 to Dn, a pixel electrode connected to the thin film transistor, a storage capacitor connected to the pixel electrode, etc.

The plurality of touch sensors TE can each serve as a touch electrode that senses a touch or can serve as a common electrode that drives the liquid crystal by forming an electric field together with the pixel electrode. That is, the plurality of touch sensors TE can each be used as a touch electrode during the touch period TP1 to TP16 and as a common electrode during the display period DP1 to DP16. Each of the plurality of touch sensors TE can comprise a transparent conductive material, but is not limited thereto.

Since each of the plurality of touch sensors TE is used as a self-capacitance type touch sensor TE during the touch period TP1 to TP16, it can have a size greater than the minimum contact size between the touch object and the panel 105. For example, each of the plurality of touch sensors TE can have a size corresponding to the size of one or more pixels P. A plurality of touch sensors TE can be disposed along a plurality of horizontal lines and a plurality of vertical lines. The plurality of touch lines T1 to Tk can be individually connected to the plurality of touch sensors TE, but is not limited thereto. For example, the common voltage VCOM can be supplied to the plurality of touch sensors TE through the plurality of touch lines T1 to Tk during the display period DP1 to DP16, but is not limited thereto. For example, during the touch period TP1 to TP16, a touch sensing signal can be output from a plurality of touch sensors TE or at least one of them through a plurality of touch lines T1 to Tk.

The display driving device 110 can supply data signals to a plurality of pixels P so that an image is displayed on the panel 105 during the display period DP1 to DP16. The display driving device 110 can comprise a data processing device 111, a gate driving device 112, a data driving device 113, etc. The data processing device 111 can comprise a timing controller.

The data processing device 111 can receive various timing signals from the host system. The timing signals can comprise a vertical synchronization signal Vsync, a horizontal synchronization signal Hsync, a data enable signal DE, a clock signal CLK, etc. The data processing device 111 can generate various control signals based on the timing signals.

For example, the control signals can comprise a gate control signal GCS for controlling the gate driving device 112 and a data control signal DCS for controlling the data driving device 113. The data processing device 111 can receive an image signal, that is, digital image data RGB, from the host system and convert it into an image signal RGB' that can be processed by the data driving device 113.

The data processing device 111 can generate a touch synchronization signal Tsync using a clock signal CLK, a vertical synchronization signal Vsync, a data enable signal, etc. The data processing device 111 can transmit the touch synchronization signal Tsync to the gate driving device 112, the data driving device 113, and the touch controller 130.

As described above, each of the gate driving device 112, the data driving device 113, and the touch controller 130 can time-divide a plurality of display periods DP1 to DP16 and a plurality of touch periods TP1 to TP16 using the touch synchronization signal Tsync. For example, the display periods DP1 to DP16 and the touch periods TP1 to TP16 can be allocated so that the display periods DP1 to DP16 and the touch periods TP1 to TP16 are alternately located.

Alternatively, the data processing device 111 can time-divide a plurality of display periods DP1 to DP16 and a plurality of touch periods TP1 to TP16 using the touch synchronization signal Tsync. In this instance, the data processing device can transmit control signals related to the time-divided plurality of display periods DP1 to DP16 and the time-divided plurality of touch periods TP1 to TP16 to the gate driving device 112, the data driving device 113, and the touch controller. (130) instead of the touch synchronization signal Tsync.

The host system converts the digital image data RGB into the image signal RGB' having a format suitable for display on the panel 105. The host system can transmit timing signals Vsync, Hsync, DE and CLK along with the image signal RGB' to the data processing device 111. The host system can be implemented as a television system, a set-top box, a navigation system, a DVD player, a blu-ray player, a personal computer PC, a home theater system, a mobile system, an electronic system for a vehicle, a ship, or an aviation.

Meanwhile, the host system can receive touch input coordinates from the touch driving device 120 and execute an application program linked to the received touch input coordinates or perform a corresponding operation.

The gate driving device 112 can receive the gate control signal GCS from the data processing device 111 during the display period DP1 to DP16. The gate driving device 112 can generate scan pulses in response to the gate control signal GCS. The scan pulses can be provided to corresponding pixels P of the panel 105 through corresponding gate lines G1 to Gm.

The gate driving device 112 can supply scan pulses to the gate lines G1 to Gm during the display period DP1 to DP16, but may not supply scan pulses to the gate lines G1 to Gm during the touch period TP1 to TP16. That is, the gate lines G1 to Gm can be maintained at a high level during the display period DP1 to DP16, and the gate lines G1 to Gm can be maintained at a low level during the touch period TP1 to TP16.
Accordingly, a scan pulse is supplied during the display period DP1 to DP16 to select the pixels P connected to the corresponding gate line G1 to Gm, and the gate lines G1 to Gm are maintained at a low level during the touch period TP1 to TP16, so that output fluctuations of touch sensors TE are prevented.

The data driving device 113 can receive the data control signal DCS and the image signal RGB' from the data processing device 111 during the display period DP1 to DP16. The data driving device 113 can convert the image signal RGB' into an analog data signal using a data control signal DCS, and transmit the data signal to the pixels P through a plurality of data lines D1 to Dn.

The data driving device 113 can comprise a plurality of source driving integrated circuits (SDICs). One source driving integrated circuit (SDIC) can be connected to a plurality of data lines, so that that one source driving integrated circuit (SDIC) can supply a plurality of data signals to the panel 105 through the plurality of data lines.

Meanwhile, the touch driving device 120 can sense a touch through the touch sensors TE during the touch period TP1 to TP16. Specifically, the touch driving device 120 can drive the touch sensors TE by supplying a touch driving signal to the touch sensors TE. The touch driving signal can be generated based on the common voltage VCOM, but is not limited thereto. The touch driving signal can be a common voltage VCOM. The touch driving signal can be a direct current signal or a pulse signal. When the panel 105 is touched, the touch sensor TE can generate a touch sensing signal by sensing a change in capacitance of the area where the touch occurred.

If the panel 105 is implemented in a mutual-capacitance method, the touch lines T1 to Tk to which the touch driving signal is supplied and the touch lines T1 to Tk to which the touch sensing line is output can be provided independently. When the panel 105 is implemented using a self-capacitance method, the touch lines T1 to Tk to which the touch driving signal is supplied and the touch lines T1 to Tk to which the touch sensing line is output can be the same. For example, a touch driving signal can be supplied to the touch sensor TE through the first touch line T1, and a touch sensing signal from the touch sensor TE can be output through the first touch line T1.

The touch driving device 120 can comprise a controller 130, a touch sensing circuit 140, etc. The controller 130 can be called a touch controller, a touch microcontroller unit, etc.

The controller 130 can perform a touch sensing operation during the touch period TP1 to TP16. The controller 130 can control the touch sensing circuit 140 to perform a touch sensing operation during the touch period TP1 to TP16.

The controller 130 can obtain touch coordinates based on the touch sensing signal received through the touch sensing circuit 140, and execute an application program or perform a corresponding operation corresponding to the touch coordinates. The controller 130 can transmit information comprising the corresponding touch coordinates to the data processing device 111. In this instance, the data processing device 111 can execute an application program corresponding to the touch coordinates or perform a corresponding operation based on information comprising the touch coordinates received from the controller 130.

The controller 130 can detect an abnormal signal on the panel 105 during the detection period ESD1 and ESD2. The abnormal signal can comprise noise such as static electricity. The controller 130 can control the touch sensing circuit 140 to detect an abnormal signal on the panel 105 during the detection period ESD1 and ESD2.

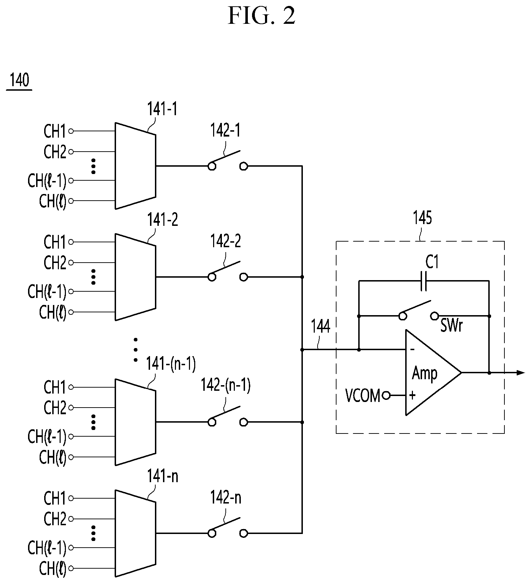

FIG. 2 is a circuit diagram showing a touch sensing circuit according to a first embodiment.

Referring to FIGS. 1 and 2, the touch sensing circuit 140 can comprise a plurality of multiplexers 141-1 to 141-n, a plurality of switches 142-1 to 142-n, and a sensing signal generation circuit 145, etc.

The multiplexers 141-1 to 141-n can each select one touch sensing signal among the plurality of touch sensing signals input to the plurality of channels CH1 to CHl. The plurality of channels CH1 to CHl can each be connected to a plurality of touch lines T1 to Tl.

For example, when a touch sensing signal is input to the first channel CH1 of the first multiplexers 141-1 to 141-n, the first multiplexers 141-1 to 141-n can output a touch sensing signal input to the first channel CH1 in response to the selection control signal. For example, when a touch sensing signal is input to the second channel CH2 of the first multiplexers 141-1 to 141-n, the first multiplexers 141-1 to 141-n can output a touch sensing signal input to the second channel CH2 in response to the selection control signal. The selection control signal can be generated in the controller 130 or the data processing device 111.

Accordingly, the multiplexers 141-1 to 141-n can sequentially output a plurality of touch sensing signals input to a plurality of channels CH1 to CHl, respectively. For example, the touch sensing signals input to the first channels CH1 of the plurality of multiplexers 141-1 to 141-n can be sequentially output, and the touch sensing signals input to the second channels CH2 of the plurality of multiplexers 141-1 to 141-n can be sequentially output. By operating in this manner, a plurality of touch sensing signals input to the lth channels CHl of the plurality of multiplexers 141-1 to 141-n can be sequentially output.

A plurality of switches 142-1 to 142-n can be connected to output terminals of a plurality of multiplexers 141-1 to 141-n, respectively. The plurality of switches 142-1 to 142-n can control the output of touch sensing signals output from the plurality of multiplexers 141-1 to 141-n, respectively. That is, when the corresponding switches 142-1 to 142-n are turned on, a touch sensing signal can be provided to the sensing signal generation circuit 145, and when the corresponding switches 142-1 to 142-n are turned off, the touch sensing signal may be not provided to the sensing signal generation circuit 145.

By using a plurality of multiplexers 141-1 to 141-n and a plurality of switches 142-1 to 142-n, even if only one sensing signal generating circuit 145 is provided, one sensing signal generation circuit 145 can generate a corresponding touch sensing signal for touch sensing signals output from all touch sensors TE or all touch lines T1 to Tk on the panel 105. Accordingly, the structure of the touch sensing circuit 140 can be simple and the size of the touch sensing circuit 140 can be greatly reduced.

Meanwhile, the sensing signal generation circuit 145 can comprise an integrator. Although not shown, the sensing signal generation circuit 145 can comprise a sample and hold circuit, an analog-to-digital converter ADC, etc.

The integrator can comprise an amplifier Amp, a capacitor C1, a reset switch SWr, etc. The capacitor C1 and the reset switch SWr can be connected in parallel between an inverting (-) terminal and an output terminal of the amplifier Amp. A common voltage VCOM can be input to a non-inverting (+) terminal of the amplifier Amp.

The integrator can integrate the analog signal corresponding to the touch sensing signal. The value integrated by the capacitor C1, that is, the touch sensing data, can be output through the output terminal of the amplifier Amp. Before performing integration of the next touch sensing signal, that is, the next analog signal, the output terminal of the amplifier Amp can be reset by the reset switch SWr. The integrator can integrate the abnormal signal into an analog signal.

The sample and hold circuit can maintain touch sensing data output from an amplifier Amp for a certain period of time. The sample and hold circuit can output touch sensing data to an analog-to-digital converter after a certain period of time. The analog-to-digital converter can convert touch sensing data output from the sample and hold circuit into digital touch sensing data. The digital touch sensing data can be transmitted to the controller 130 and used for touch recognition or calculation of touch coordinates.

### [Touch sensing operation]

As shown in FIG. 5, the dummy period DUM1 and DUM2 and the data period DA1 and DA2 can be alternately allocated based on the touch synchronization signal Tsync.

The dummy period DUM1 and DUM2 can comprise a plurality of touch periods TP1 to TP3 and TP9 to TP11, and the data period DA1 and DA2 can comprise a plurality of touch periods TP4 to TP8 and TP12 to TP16. A touch sensing operation may not be performed in each of the plurality of touch periods TP1 to TP3 and TP9 to TP11 of the dummy period DUM1 and DUM2. A touch sensing operation can be performed in each of the plurality of touch periods TP4 to TP8 and TP12 to TP16 of the data period DA1 and DA2.

The display period DP1 to DP16 can be allocated before and after the touch period TP1 to TP16.

Referring to FIGS. 1 to 5, the controller 130 can control the touch sensing circuit 140 to supply the driving signal STX to a touch sensor TE on the panel 105 in each of the plurality of touch periods TP4 to TP8 and TP12 to TP16 of the data period DA1 and DA2. Accordingly, a touch sensing signal can be output in response to the driving signal from the touch sensor TE. The touch sensing signal can comprise a change in capacitance. When there is no touch or proximity by an object, the touch sensing signal can be 0 or a value close to 0. When there is a touch or proximity by an object, the touch sensing signal can be a value corresponding to the amount of change in capacitance. The touch sensing signal can be an analog signal.

The multiplexers 141-1 to 141-n of the touch sensing circuit 140 can sequentially select a plurality of channels CH1 to CHl, respectively. A plurality of switches 142-1 to 142-n connected to each of the multiplexers 141-1 to 141-n can be sequentially turned on. For example, the first switch 142-1 can be turned on so that a touch sensing signal is output from the first multiplexers 141-1 to 141-n. When the touch sensing signal is not output from the first multiplexers 141-1 to 141-n, the first switch 142-1 can be turned off. For example, the second switch 142-2 can be turned on so that a touch sensing signal is output from the second multiplexer 141-2. When the touch sensing signal is not output from the second multiplexer 141-2, the second switch 142-2 can be turned off. In this way, the plurality of switches 142-1 to 142-n can be turned on when a touch sensing signal is output from the corresponding multiplexers 141-1 to 141-n, respectively, and can be turned off when the touch sensing signal is not output from the corresponding multiplexers 141-1 to 141-n.

The same control signal can be provided to the multiplexers 141-1 to 141-n and the switches 142-1 to 142-n connected to the multiplexers 141-1 to 141-n, but is not limited thereto. The control signal can be generated by the controller 130 or the data processing device 111.

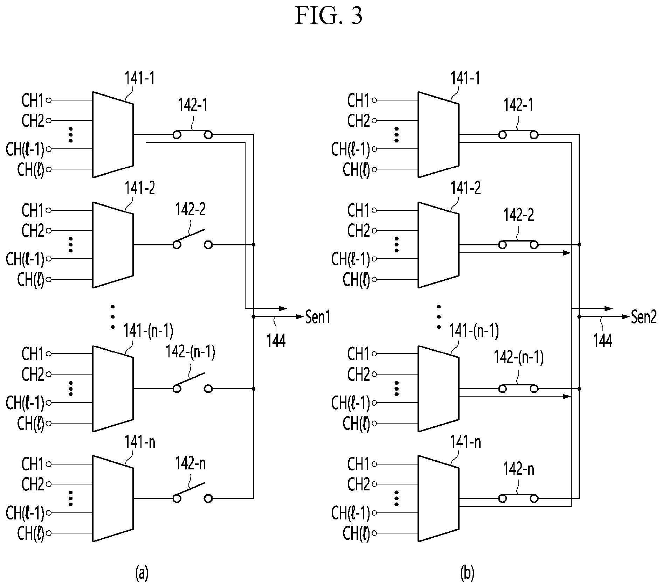

For example, as shown in FIG. 3a, a high-level control signal can be provided to the first multiplexers 141-1 to 141-n and the first switch 142-1. Accordingly, as shown in FIG. 4, the first multiplexers 141-1 to 141-n can output the touch sensing signal Sen1 input through the first channel CH1, and the first switch 142- 1) is turned on, so that the touch sensing signal Sen1 output from the first multiplexers 141-1 to 141-n can be transmitted to the sensing signal generation circuit 145 via the first switch 142-1.

Referring again to FIGS. 1 and 2, the sensing signal generation circuit 145 can process the touch sensing signal Sen1 to generate touch sensing data, and transmit the touch sensing data to the controller 130. The controller 130 can generate an interrupt signal when receiving a predetermined number of touch sensing data during the data period DA1 and DA2. The interrupt signal can be a signal indicating that reception of one frame of touch sensing data is complete. When an interrupt signal is generated, the controller 130 can perform touch recognition or obtain touch coordinates based on touch sensing data of one frame. The controller 130 can perform an application program or a corresponding operation according to the corresponding touch coordinates, or can transmit information comprising the corresponding touch coordinates to the data processing device 111.

### [Abnormal signal detection operation]

As shown in FIG. 5, some 3LHB and 11LHB of the dummy period DUM1 and DUM2 can be allocated to the detection period ESD1 and ESD2.

Referring to FIG. 1, the controller 130 can control the touch sensing circuit 140 to detect an abnormal signal on the panel 105 during the detection period ESD1 and ESD2. The abnormal signal can comprise noise such as static electricity.

Specifically, the controller 130 can control the touch sensing circuit 140 during the detection period ESD1 and ESD2 to prevent the driving signal from being supplied to the touch sensors TE on the panel 105. Accordingly, the touch sensors TE on the panel 105 can be maintained in a floating state. As such, since the touch sensors TE on the panel 105 are maintained in a floating state, the touch sensor TE operation is not performed during the detection period ESD1 and ESD2. That is, even if an object touches or approaches the panel 105, no touch sensing signal may be output through the plurality of touch lines T1 to Tk during the detection period ESD1 and ESD2. Even if any touch sensing signal is output through the plurality of touch lines T1 to Tk, all of the plurality of switches 142-1 to 142-n can be turned off, so that no touch sensing signal may be transmitted to the touch signal generation circuit 145.

When noise such as static electricity flows into the panel 105, the static electricity can affect the display operation of the panel 105 or the touch operation of the panel 105.

In the embodiment, malfunction of touch operations can be prevented by detecting noise such as static electricity in advance.

To this end, as shown in FIG. 3b, the controller 130 can control the touch sensing circuit 140 during the detection period ESD1 and ESD2 to simultaneously turn on a plurality of switches 142-1 to 142-n connected to a plurality of multiplexers 141-1 to 141-n.

Meanwhile, abnormal signal or touch sensing data can be output through an integrator and an analog-to-digital converter. At this time, the abnormal signal or the touch sensing data can have digital bit values of different levels. The level of touch sensing data can be greater than the level of the abnormal signal. For example, based on a 12-bit binary value, the level of touch sensing data can be about 2000, and the abnormal signal can have a value of 1000 or lower. Since the abnormal signal is a signal that reflects static electricity of very different sizes, if the digital bit value output from the analog-to-digital converter exceeds 4096, the maximum binary value of 12 bits, abnormality detection may be impossible due to error processing. Accordingly, the level of the abnormal signal can be managed to be lower than the level of the touch sensing data. Meanwhile, the controller 130 can identify whether the digital signal output through the analog-to-digital converter is an abnormal signal or touch sensing data based on the level of the abnormal signal and the level of the touch sensing data, making abnormality detection easy.

Although not shown, each of the multiplexers 141-1 to 141-n can simultaneously connect a plurality of channels CH1 to CHl to the output terminal. As described above, a plurality of channels CH1 to CHl connected to a plurality of multiplexers 141-1 to 141-n can be connected to a plurality of touch lines T1 to Tk on the panel 105. That is, the controller 130 can simultaneously connect a plurality of channels CH1 to CHl to the output terminal in each of the plurality of multiplexers 141-1 to 141-n and turn on all of the plurality of switches 142-1 to 142-n during the detection period ESD1 and ESD2. Accordingly, a plurality of touch lines T1 to Tk, a plurality of multiplexers 141-1 to 141-n, and a plurality of switches 142-1 to 142-n disposed on the entire area of the panel 105 can be maintained in a connected state as a whole.

Noise such as static electricity flowing into the entire area or part of the panel 105 can be input to a sensing signal generation circuit 145 as an abnormal signal Sen2 simultaneously through a plurality of multiplexers 141-1 to 141-n and a plurality of switches 142-1 to 142-n via one line 144. At this time, the intensity of the abnormal signal Sen2 input to the sensing signal generation circuit 145 through one line 144 can vary depending on the size of the area on the panel 105 into which static electricity is introduced or the intensity of static electricity.

The sensing signal generation circuit 145 can process the abnormal signal Sen2 to generate touch sensing data and transmit the touch sensing data to the controller 130. When touch sensing data is received from the sensing signal generation circuit 145 during the detection period ESD1 and ESD2 even though no signal should be received during the detection period ESD1 and ESD2, the controller 130 can determine the touch sensing data to be an abnormal signal corresponding to noise such as static electricity.

As an example, when an abnormal signal is detected during the detection period ESD1 and ESD2, the controller 130 can ignore or discard the touch sensing signal obtained during at least one or more data period DA1 and DA2 following the corresponding detection period ESD1 and ESD2.

As another example, when an abnormal signal is detected during the detection period ESD1 and ESD2, the controller 130 can reset the touch driving device 120 or initialize the touch sensing operation during at least one or more data periods DA1 and DA2 following the detection period ESD1 and ESD2.

Therefore, the touch sensing signal obtained during the data period DA1 and DA2 may be not used for touch recognition or calculation of touch coordinates, so that the reliability of the product can be improved by fundamentally blocking the occurrence of ghost touches or touch insensitivity phenomenon.

Meanwhile, the touch sensing signal sensed during the data period DA1 and DA2 and the abnormal signal detected during the detection period ESD1 and ESD2 have different intensities. For example, the intensity of the abnormal signal can be significantly greater than the intensity of the touch sensing signal.

In an embodiment, the sensing signal generation circuit 145 can be set to comply with the processing of a touch sensing signal. Therefore, when an abnormal signal is processed in the sensing signal generation circuit 145, the processed value can be too large to be determined by the controller 130. Therefore, the abnormal signal also needs to be adjusted to comply with the processing of the sensing signal generation circuit 145.

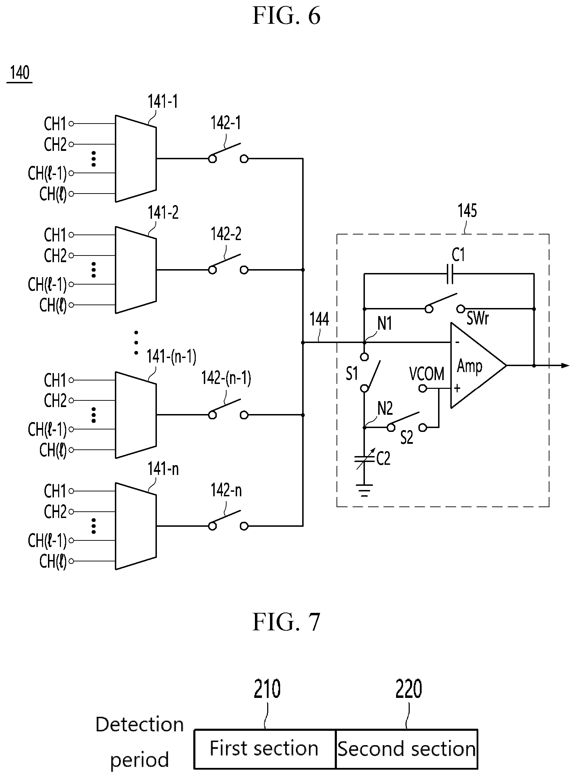

With reference to FIG. 6, the control of abnormal signals will be described in detail. FIG. 6 is a circuit diagram showing a touch sensing circuit according to a second embodiment.

The second embodiment is the same as the first embodiment (FIG. 2) except for the sensing signal generation circuit 145. Accordingly, in the second embodiment, components having the same functions as those in the first embodiment are given the same reference numerals and detailed descriptions are omitted.

Referring to FIG. 6, the touch sensing circuit 140 according to the second embodiment can comprise a plurality of multiplexers 141-1 to 141-n, a plurality of switches 142-1 to 142-n, a sensing signal generation circuit 145, etc.

The sensing signal generation circuit 145 can comprise an amplifier Amp, a capacitor C1 connected in parallel between an inverting (-) terminal and an output terminal of the amplifier Amp, a reset switch SWr, a first switch S1, a second switch S2, a variable capacitor C2, etc.

The first switch S1 can be connected between a first node N1 and a second node N2. The first node N1 can be a point on the line 144 connected to the inverting (-) terminal of the amplifier Amp. The second switch S2 can be connected between the non-inverting (+) terminal of the amplifier Amp and the second node N2. The variable capacitor C2 can be connected between the second node N2 and ground. The variable capacitor C2 can be connected to a line supplied with a predetermined voltage instead of ground.

As shown in FIG. 3b, during the detection period ESD1 and ESD2, when an abnormal signal comprising noise such as static electricity is input to the sensing signal generation circuit 145 via a plurality of multiplexers 141-1 to 141-n and a plurality of switches 142-1 to 142-n, the abnormal signal can be adjusted by the first switch S1, the second switch S2, and the variable capacitor C2.

As shown in FIG. 7, the detection period ESD1 and ESD2 can be divided into a first section 210 and a second section 220. The width of each of the first section 210 and the second section 220 can vary depending on the discharge time of the abnormal signal and the performance of the amplifier Amp.

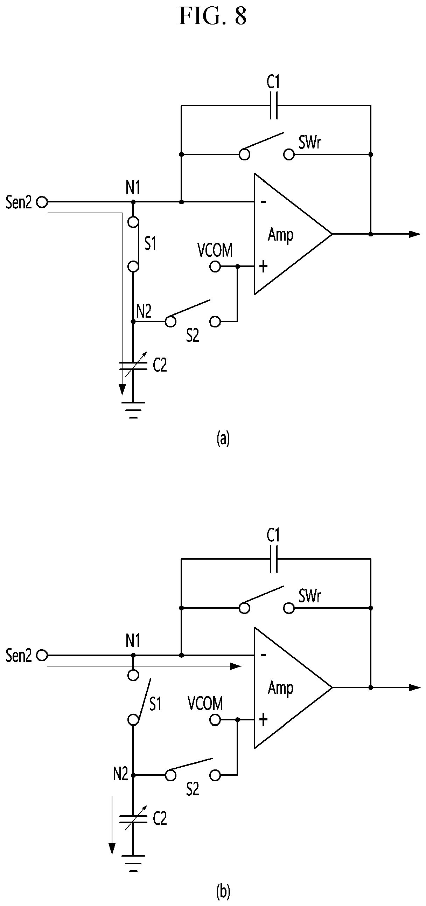

Referring to FIGS. 1, 6, and 8a, the controller 130 can control the sensing signal generation circuit 145 to turn on the first switch S1 and turn off the second switch S2 during the first section 210 of the detection period ESD1 and ESD2. Therefore, the abnormal signal passing through the plurality of multiplexers 141-1 to 141-n and the plurality of switches 142-1 to 142-n during the detection period ESD1 and ESD2 can be discharged through the first switch S1 and the variable capacitor C2. The discharge speed of the abnormal signal can be determined by the capacitance of the variable capacitor C2. For example, as the size of static electricity increases, the capacitance of the variable capacitor C2 can be changed to increase, so that that the abnormal signal can be quickly discharged. The value of the abnormal signal can be reduced by discharging during the first section 210. The reduced abnormal signal is a voltage greater than the common voltage VCOM and, for example, can be the same or similar to the touch sensing signal, but is not limited thereto.

Referring to FIGS. 1, 6, and 8b, the controller 130 can turn off the first switch S1 and turn off the second switch S2 during the second section 220 of the detection period ESD1 and ESD2. In this instance, the reduced abnormal signal can be input to the inverting (-) terminal of the amplifier Amp, amplified (or integrated), and then converted into a digital signal. The converted digital signal can be transmitted to the controller 130 as an abnormal signal.

Each of the first switch S1 and the second switch S2 can be turned off, and the variable capacitor C2 can be maintained in a floating state, so that the abnormal signal charged in the variable capacitor C2 can be continuously discharged and initialized to 0.

Meanwhile, when the first switch S1 and the second switch S2 are turned on, the common voltage VCOM can be supplied as a driving signal to the touch sensor TE through a specific touch line connected to a specific channel, but is not limited thereto. The driving signal may be supplied to all touch sensors TE through a plurality of switches 142-1 to 142-n and a plurality of multiplexers 141-1 to 141-n via all touch lines T1 to Tk on the panel 105.

Meanwhile, the controller 130 can obtain whether a digital signal is received every detection period ESD1 and ESD2, and when a digital signal is received, the controller 130 can determine the digital signal to be an abnormal signal.

For example, if noise such as static electricity does not flow into the panel 105, an abnormal signal is not detected during the detection period ESD1 and ESD2. Accordingly, since the touch sensing circuit 140 cannot generate digital signals, the controller 130 may not receive digital signals. Through this, the controller 130 can determine that noise such as static electricity does not flow into the panel 105.

For example, when noise such as static electricity flows into the panel 105, an abnormal signal can be detected during the detection period ESD1 and ESD2. Accordingly, the touch sensing circuit 140 can generate a digital signal based on the abnormal signal and transmit the generated digital signal to the controller 130. Accordingly, the controller 130 can determine that noise, such as static electricity, is introduced into the panel 105 through reception of a digital signal.

Meanwhile, the controller 130 can receive a digital signal as an abnormality signal during the detection period ESD1 and ESD2 and receive a touch sensing signal during the data period DA1 and DA2, and these abnormality signals and the touch sensing signal can have similar values. Nevertheless, the controller 130 can identify an abnormal signal and a touch sensing signal. The controller 130 can identify an abnormal signal and a touch sensing signal by determining which of the detection period ESD1 and ESD2 and the data period DA1 and DA2 the signal was received.

If noise such as static electricity does not flow into the panel 105, no signal is received by the controller 130 during the detection period ESD1 and ESD2. For example, noise such as static electricity can flow into the panel 105 and a signal similar to a touch sensing signal can be transmitted to the controller 130 during the detection ESD1 and ESD2. In this instance, the controller 130 can determine that the signal is an abnormal signal based on the fact that the signal is received in the detection period ESD1 and ESD2 rather than the data period DA1 and DA2.

The above detailed description should not be construed as limiting in all respects and should be considered illustrative. The scope of the embodiments should be determined by reasonable interpretation of the appended claims, and all changes within the equivalent scope of the embodiments are included in the scope of the embodiments.

## Claims

1. A touch driving device for time-dividing operation of a panel with an in-cell touch type structure, comprising:
a controller configured to detect an abnormal signal on the panel during a detection period,
wherein when allocating dummy periods and data period to be located alternately, the detection period is allocated within the dummy period.

2. The touch driving device of claim 1, wherein the dummy period and the data period are configured to be allocated based on a touch synchronization signal.

3. The touch driving device of claim 1, wherein when the detection period is located before the data period, the detection period is adj acent to a first touch period of a plurality of touch periods.

4. The touch driving device of claim 3, wherein when the detection period is located after the data period, the detection period is spaced far from the last touch period of the plurality of touch periods.

5. The touch driving device of claim 1, wherein when detecting the abnormal signal on the panel, the controller is configured to ignore a touch sensing signal obtained during the data period or reset the touch driving device.

6. A touch driving device, comprising:
a plurality of multiplexers configured to receive a plurality of touch sensing signals or an abnormal signal from a panel; and
a controller configured to detect the abnormal signal through the plurality of multiplexers during a detection period,
wherein when allocating dummy periods and data period to be located alternately, the detection period is allocated within the dummy period.

7. The touch driving device of claim 6, comprising:
a plurality of switches between the plurality of multiplexers and the controller.

8. The touch driving device of claim 7, wherein when receiving the plurality of touch sensing signals, the controller is configured to sequentially turn on the plurality of switches.

9. The touch driving device of claim 7, wherein when detecting the abnormal signal, the controller is configured to simultaneously turn on the plurality of switches.

10. A display device, comprising:
a panel; and
a touch driving device configured to detect an abnormal signal on the panel during a detection period,
wherein when allocating dummy periods and data period to be located alternately, the detection period is allocated within the dummy period.
